# EUROPÄISCHE PATENTANMELDUNG

(11) **EP 0 943 945 A2**
(43) Veröffentlichungstag der Anmeldung: **22.09.1999**
(21) Anmeldenummer: 99400339.0
(22) Anmeldetag: 10.02.1999
(51) Int. Cl.: G02B 6/44

(54) **Flammwidriges optisches Kabel**

(30) Priorität: 18.03.1998 DE 19811772
(71) Anmelder: ALCATEL, 75008 Paris (FR)
(72) Erfinder: Lausch, Peter, 47803 Krefeld (DE); Weiss, Alexander, 41066 Mönchengladbach (DE); Nothofer, Klaus, 40699 Erkrath (DE)
(74) Vertreter: Döring, Roger, Dipl.-Ing.

(57) **Zusammenfassung**

Vorgeschlagen wird ein optisches Kabel mit einem oder mehreren Lichtwellenleitern (4), die in einer Ader (1) mit einer Hülle aus Polypropylen oder in einem Trägerelement (8) aus Polypropylen angeordnet sind, sowie mit einem äußeren Mantel (6). Das Polypropylen enthält einen brandhemmenden Zusatz, dessen Basis ein Ammoniumpolyphosphat ist, und der Mantel (6) besteht aus einem halogenfreien, flammwidrigen Material.

## Beschreibung

Die Erfindung bezieht sich auf ein optisches Kabel mit einem oder mehreren Lichtwellenleitern, die in einer Ader mit einer Hülle aus Polypropylen oder in einem Trägerelement aus Polypropylen angeordnet sind, sowie mit einem äußeren Mantel.

Optische Kabel mit einem oder mehreren Lichtwellenleitern sind in unterschiedlichen Ausführungen bekannt. Üblicherweise sind der bzw. die Lichtwellenleiter in Adern oder Trägerelementen angeordnet, die sie bei der Herstellung und Verlegung des Kabels vor mechanischen Beschädigungen schützen. Gebräuchlich sind Hohl- bzw, Bündeladern aus einem Kunststoff, welche einen oder mehrere Lichtwellenleiter umschließen und meist um ein zugfestes Zentralelement des Kabels verseilt sind. Ein derartiges Kabel mit Hohladern, die z. B. aus Polypropylen bestehen, zeigt die Druckschrift DE 25 13 724 B2. Alternativ sind die Lichtwellenleiter eines optischen Kabels häufig einzeln oder als Bändchen in näherungsweise in Längsrichtung verlaufende, schlitzförmige Aussparungen in der Oberfläche eines Trägerelementes eingelegt ("slotted core cable" oder Kammerkabel). Auch geschlitzte Trägerelemente bestehen in der Regel aus einem Kunststoff, der meist durch zugfeste Einlagen verstärkt ist, etwa aus Glasfasern oder Stahl. Außenseitig wird das optische Kabel vorzugsweise durch einen Außenmantel aus polymerem Material abgeschlossen.

Gebräuchliche optische Kabel sind aufgrund der verwendeten Polymermaterialien im allgemeinen brennbar. Selbst wenn der Außenmantel aus einem nicht brennbaren Werkstoff besteht, erweist es sich im Brandfall als problematisch, daß die Materialien der Kabelseele brandfördernd wirken. Zur Verbesserung des Brandverhaltens ist in der Druckschrift EP 0 484 744 A2 vorgeschlagen worden, Hohladern mit einer flammhemmenden Masse auf Ölbasis zu füllen. Auch in diesem Fall sind jedoch die mechanisch festen Bestandteile der Kabelseele brennbar. Zur Vereinfachung der Handhabung ist es zudem in vielen Fällen erwünscht, daß die Kabelseele frei von flüssigen Füllmassen ist.

Von erheblicher Bedeutung ist das Verhalten im Brandrall insbesondere bei Kabeln in Innenräumen und Tunnelsystemen, etwa Flughäfen, Bahnhöfen oder U-Bahnen. Erhebliche Gefahren und Schäden werden durch sichthemmende Rauchpartikel und toxische Gase bewirkt, welche die Flucht von Personen behindern und häufig ihren Tod zur Folge haben. Aus diesen Gründen besteht bei der Verwendung in Innenräumen und Tunneln nicht nur die Anforderung nach Flammwidrigkeit, sondern es ist gleichzeitig erforderlich, daß das Kabel halogenfrei ist und raucharm brennt. Um die Fluchtmöglichkeit von Personen zu verbessern, ist vor allem im Anfangsstadium des Brandes eine geringe Rauchdichte von Vorteil.

Vor diesem Hintergrund hat sich die Erfindung die Entwicklung eines flammwidrigen, halogenfreien, optischen Kabels, insbesondere für Innenräume, zur Aufgabe gestellt, das sich im Brandfall durch eine geringe Rauchdichte auszeichnet.

Diese Aufgabe wird erfindungsgemäß dadurch gelöst, daß das Polypropylen einen brandhemmenden Zusatz enthält, dessen Basis ein Ammoniumpolyphosphat ist, und der Mantel aus einem halogenfreien, flammwidrigen Material besteht.

Die Aderhüllen oder Trägerelemente des vorgeschlagenen Kabels, welche die Lichtwellenleiter vor radialen mechanischen Beanspruchungen schützen, bestehen aus Polypropylen, das sich durch vorteilhafte mechanische Eigenschaften auszeichnet. Insbesondere hat es eine vergleichsweise hohe Härte und Rückstellfähigkeit. Um eine hinreichende Flammwidrigkeit zu erreichen, enthält das Polypropylen einen Brandhemmer, dessen Basis ein Ammoniumpolyphosphat ist. Geeignete Brandhemmer sind beispielsweise die Produkte Hostaflam AP 750 und Hostaflam AP 751 (Hersteller Clariant, Frankfurt/Main) . Die Wirkung des Ammoniumpolyphosphats besteht darin, daß der damit ausgerüstete Kunststoff im Brandfall aufschäumt, wobei die Schaumschicht aushärtet. Auf diese Weise wird sowohl die Luftzufuhr zum darunter befindlichen Material unterbunden als auch die Ausbreitung des Brandes durch die thermische Isolationswirkung des Schaumes behindert. Zudem verbessert der ausgehärtete Schaum den Funktionserhalt des Kabels.

Von besonderem Vorteil ist, daß beim Brand keine toxischen Gase entstehen und die Rauchentwicklung, insbesondere zu Beginn des Brandes, erheblich reduziert ist. Die vorteilhaften mechanischen Eigenschaften des Polypropylens werden dagegen durch den Ammoniumpolyphosphatzusatz nicht beeinträchtigt. Daher können Hohl- oder Bündeladern mit einschichtiger Hülle aus einheitlichem Material verwendet werden, so daß ist eine einfache Produktion gewährleistet ist. Da sich auch die Eigenschaften im geschmolzenen Zustand gegenüber Polypropylen ohne brandhemmenden Zusatz nur unwesentlich ändern, lassen sich die gleichen Produktionswerkzeuge einsetzen. Vorzugsweise ist die Kabelseele frei von flüssigen Füllmassen.

Auch der Außenmantel des Kabel besteht aus einem halogenfreien, flammwidrigen Material, um eine ausreichende Brandsicherheit zu erreichen. Zweckmäßig besteht der Außenmantel aus einem Polyolefin mit einem brandhemmenden Zusatz, wofür sich gleichfalls Polypropylen mit einem Brandhemmer auf Basis von Ammoniumpolyphosphaten anbietet. Dabei kann das Mantelmaterial weitere, allgemein gebräuchliche Zuschlagstoffe enthalten. Von Vorteil ist in diesem Fall, daß die Kunststoffkomponenten des Kabels aus einheitlichem Material bestehen. Zudem ist der Funktionserhalt des Kabels im Brandfall verbessert.

Denkbar ist, daß ein Trägerelement im wesentlichen längsverlaufende, vorzugsweise wendelförmige Aussparungen aufweist, in denen Lichtwellenleiter verlaufen, das Kabel also ein Kammerkabel ist (slotted core cable). Das Trägerelement besteht aus Polypropylen mit einem brandhemmenden Zusatz, dessen Basis ein Ammoniumpolyphosphat ist. Ist das Trägerelement Zentralelement des Kabels, so weist es bevorzugt zugfeste Verstärkungen auf, etwa aus glasfaserverstärktem Kunststoff oder Stahl. Diese Ausgestaltung bietet sich speziell dann an, wenn die Lichtwellenleiter gruppenweise zu Bändchen zusammengefaßt sind.

Eine Hohl- oder Bündelader wird zweckmäßig um ein Zentralelement verseilt; ebenso kann ein Trägerelement um ein Zentralelement verseilt werden. Das Zentralelement ist vorzugsweise zugfest und umfaßt zum Beispiel Faserverstärkungen, etwa Glas- oder Aramidfasern. Neben den zugfesten Bestandteilen besteht das Zentralelement bevorzugt gleichfalls aus einem halogenfreien, flammwidrigen Polymer, insbesondere Polypropylen unter Zusatz von Ammoniumpolyphosphat. Alternativ kann eine Ader mit einem oder mehreren Lichtwellenleitern im Zentrum des optischen Kabels angeordnet sein, wobei das Kabel ggf. lediglich eine Ader umfaßt (unitube cable).

Zweckmäßig ist die Seele des Kabels mit einer Bewicklung versehen, beispielsweise einer Kunststoffolie. Auch die Bewicklung mit einem Glasgewebe oder einem Glimmerband ist möglich.

Im nachfolgenden Beschreibungsteil sind vorteilhafte Ausführungsbeispiele der Erfindung anhand der prinzipienhaften Zeichnung näher erläutert. Sie zeigt
Fig. 1: Querschnitt durch ein optisches Kabel mit Bündeladern,
Fig. 2: Querschnitt durch ein Kammerkabel.

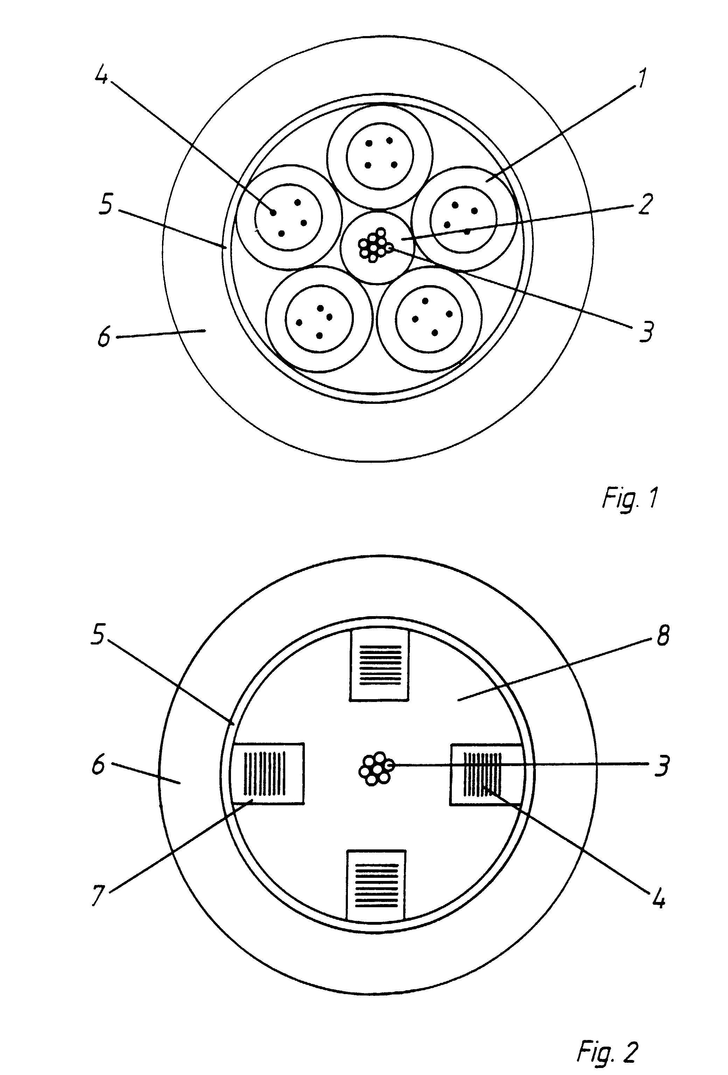

Das optische Kabel in Fig. 1 umfaßt mehrere Adern (1), im Beispiel Bündeladern, die um ein Zentralelement (2) verseilt sind. Das Zentralelement (2) besteht aus zugfesten Strängen (3), die in ein Polymermaterial eingebettet sind. Die Adern (1), welche die Lichtwellenleiter (4) des Kabels vor mechanischen Beschädigungen schützen, bestehen aus Polypropylen, dem Ammoniumpolyphosphat zugesetzt ist. Auch das Polymer des Zentralelementes (2), das die Stränge (3) umgibt, besteht zweckmäßig aus einem halogenfreien, flammwidrigen Material, vorzugsweise gleichfalls Polypropylen mit Ammoniumpolyphosphat.

Die Seele des optischen Kabels ist mit einer Bewicklung (5) versehen, etwa einem Glasgewebe- oder Glimmerband, auf das der äußere Mantel (6) des Kabels aufgebracht ist. Der Werkstoff des Mantels ist halogenfrei und flammwidrig; bevorzugt besteht er aus einem Polymer auf Polypropylenbasis, das Ammoniumpolyphosphat als Brandhemmer und gegebenenfalls weitere Zusätze aufweist.

Fig. 2 zeigt ein flammwidriges Kammerkabel, bei dem die Lichtwellenleiter (4) zu Bändchen zusammengefaßt sind und in Aussparungen (7) verlaufen, die sich spiralförmig in Längsrichtung des Trägerelementes (8) erstrecken. Das Trägerelement (8) weist zugfeste Stränge (3) auf und besteht aus mit Ammoniumpolyphosphat versetztem Polypropylen. Außenseitig wird die Kabelseele von einer Bewicklung (5) und einem Mantel (6) umgeben, die analog dem vorbeschriebenen Beispiel ausgestaltet sind.

Im Ergebnis entstehen auf diese Weise halogenfreie optische Kabel, die sich insbesondere in der Anfangsphase des Brandes durch eine geringe Rauchentwicklung auszeichnen und einen verbesserten Funktionserhalt zeigen.

## Patentansprüche

1. Optisches Kabel mit einem oder mehreren Lichtwellenleitern (4), die in einer Ader (1) mit einer Hülle aus Polypropylen oder in einem Trägerelement (8) aus Polypropylen angeordnet sind, sowie mit einem äußeren Mantel (6), dadurch gekennzeichnet, daß
das Polypropylen einen brandhemmenden Zusatz enthält, dessen Basis ein Ammoniumpolyphosphat ist, und der Mantel (6) aus einem halogenfreien, flammwidrigen Material besteht.

2. Kabel nach Anspruch 1, dadurch gekennzeichnet, daß der äußere Mantel (6) aus Polypropylen mit einem brandhemmenden Zusatz auf Basis von Ammoniumpolyphosphat besteht.

3. Kabel nach Anspruch 1 oder 2, dadurch gekennzeichnet, daß ein Trägerelement (8) schlitzförmige Aussparungen (7) aufweist, in denen Lichtwellenleiter (4) verlaufen.

4. Kabel nach einem der vorhergehenden Ansprüche, dadurch gekennzeichnet, daß eine Ader (1) oder ein Trägerelement (8) um ein Zentralelement (2) des Kabels verseilt ist.

5. Kabel nach einem der vorhergehenden Ansprüche, dadurch gekennzeichnet, daß das Zentralelement (2) des Kabels eine Ader (1) oder ein Trägerelement (8) ist.

6. Kabel nach einem der vorhergehenden Ansprüche, dadurch gekennzeichnet, daß das Zentralelement (2) des Kabels aus Polypropylen mit einem brandhemmenden Zusatz auf Basis von Ammoniumpolyphosphat besteht.

7. Kabel nach einem der vorhergehenden Ansprüche, dadurch gekennzeichnet, daß das Zentralelement (2) zugfeste Einlagen aufweist.

8. Kabel nach einem der vorhergehenden Ansprüche, dadurch gekennzeichnet, daß die Kabelseele mit einer Bewicklung (5) versehen ist.
